# EUROPÄISCHE PATENTSCHRIFT

(11) **EP 1 849 542 B1**
(45) Veröffentlichungstag und Bekanntmachung des Hinweises auf die Patenterteilung: **20.03.2013**
(21) Anmeldenummer: 06113101.7
(22) Anmeldetag: 25.04.2006
(51) Int. Cl.: B23B 15/00, B23K 20/233, C23C 30/00, C22F 1/04

(54) **Verfahren zur Herstellung eines walzplattierten hochglänzenden Aluminiumbandes**
Method of manufacture a high-mirror-finished strip by clad rolling
Procédé de production d'une bande miroir plaque

(43) Veröffentlichungstag der Anmeldung: 31.10.2007
(73) Patentinhaber: Hydro Aluminium Deutschland GmbH, 41515 Grevenbroich (DE)
(72) Erfinder: Oetting, Wolf, 50823, Köln (DE); Denkmann, Volker, 47906, Kempen (DE); Schenkel, Willi, 41515, Grevenbroich (DE); Bales, Jakob, 41451, Grevenbroich (DE)
(74) Vertreter: Cohausz & Florack

(56) Entgegenhaltungen:
- EP-A- 0 327 245
- WO-A-94/13472
- DE-A1- 19 823 472
- US-A- 3 153 278
- US-A- 3 310 389
- US-A- 3 881 883
- US-A- 4 035 201
- US-A- 4 635 842
- US-A- 4 939 044
- US-A- 5 213 639
- US-A- 5 723 221
- US-A1- 2004 045 643

## Beschreibung

Die Erfindung betrifft ein Verfahren zur Herstellung eines walzplattierten Aluminiumbandes, bei welchem ein Kernmaterial aus einer Aluminiumlegierung mindestens auf einer Seite mit einer Plattierschicht mit einem Aluminiumgehalt von mindestens 99,8 Gew.-% plattiert wird..

Walzplattierte Aluminiumbänder werden zu den unterschiedlichsten Zwecken eingesetzt. Einerseits sind walzplattierte Aluminiumbänder aus der Herstellung von gelöteten Aluminiumprodukten, beispielsweise Wärmetauschern bekannt. Zur Herstellung gelöteter Aluminiumprodukte werden dazu Aluminiumbänder mit einer walzplattierten Schicht aus Aluminiumlot verwendet. Darüber hinaus werden walzplattierte Aluminiumbänder auch zur Herstellung von korrosionsgeschützten Bauteilen oder Aluminiumprodukten mit Hochglanzoberflächen verwendet. Korrosionsgeschützte oder hochglänzende Oberflächen aufweisende walzplattierte Aluminiumprodukte weisen dann eine walzplattierte Schicht auf, welche aus Reinaluminium mit einem Aluminiumgehalt von üblicherweise mindestens 99,8 Gew.-% besteht. Zwar kann mit Plattierschichten aus Reinaluminium ein hochglänzendes Aluminiumband hergestellt werden, welches zugleich auch einen Korrosionsschutz bietet. Allerdings ist Reinaluminium mit entsprechend hohen Aluminiumgehalten in seiner Herstellung sehr teuer, so dass man versucht die Schichtdicken der hochglänzenden Plattierschichten so gering wie möglich zu halten.

Aus der US-Patentschrift US 5,723,321 ist nun die Herstellung eines walzplattierten Aluminiumproduktes bekannt, welches eine beidseitige Plattierschicht mit einer Dicke von 50 bis 100 µm aus reinem Aluminium aufweist. Trotz der geringen Dicke der Plattierschichten besteht weiterhin der Wunsch, die Plattierschichtdicke zu verringern, um die Kosten eines entsprechenden walzplattierten Aluminiumbandes weiter zu senken. Andererseits muss die Verfärbung bei einem Anodisieren der Plattierschicht aufgrund von an die Oberfläche der Plattierschicht diffundierten Legierungsbestandteilen aus dem Kernmaterial prozesssicher vermieden werden.

Darüber hinaus wird in der FR 2 782 668 ein walzplattiertes Aluminiumband mit einer Plattierschicht aus reinem Aluminium und einem Kernmaterial aus einer Aluminiumlegierung vom Typ AA4xxx beschrieben. Die Dicke der Plattierschicht soll bei dem bekannten Aluminiumband mehr als 10 µm betragen.

Ein walzplattiertes Aluminiumband mit einem Kern aus einer Aluminiumlegierung vom Typ AA 4343 und einer texturierten Plattierschicht aus einem Al 99,5 mit 0,35 Gew.-% Cr ist aus der US 3,153,278 bekannt.

Hiervon ausgehend liegt der vorliegenden Erfindung daher die Aufgabe zugrunde, ein Verfahren zur Herstellung eines walzplattierten, hochglänzenden Aluminiumbandes zur Verfügung zu stellen, mit welchem die Kosten zur Herstellung walzplattierter, hochglänzender Aluminiumbänder weiter gesenkt werden können und gleichzeitig eine Verfärbung beim Anodisieren verhindert werden kann. Daneben liegt der vorliegenden Erfindung die Aufgabe zugrunde, kostengünstigere walzplattierte und hochglänzende Aluminiumbänder zur Verfügung zu stellen.

Gemäß einer ersten Lehre der vorliegenden Erfindung wird die oben aufgezeigte Aufgabe durch ein gattungsgemäßes Verfahren dadurch gelöst, dass die Schichtdicke der Plattierschicht vor der letzten Zwischenglühung mindestens 50 µm beträgt. Es hat sich gezeigt, dass die Diffusion von Legierungsbestandteilen aus der Kernschicht an die Oberfläche der hochglänzenden Plattierschicht aus Reinaluminium im Wesentlichen während der Zwischenglühung des Aluminiumbandes stattfindet und dadurch verhindert werden kann, dass vor der letzten Zwischenglühung, d.h. vor der letzten Wärmebehandlung des Aluminiumbandes, die Schichtdicke der Plattierschicht ausreichend dick ist. Trotz der hohen Temperaturen und der langen Einwirkzeit der hohen Temperaturen beim Glühen des Bandes, insbesondere beim Glühen des Aluminiumbandes in Batchöfen bzw. beim Glühen eines zum Coil aufgewickelten Aluminiumbandes, ist diese Schichtdicke der Plattierschicht von mindestens 50 µm ausreichend, um als Diffusionssperre zu dienen. Sofern vor der letzten Zwischenglühung die Plattierschichtdicke mindestens 50 µm beträgt und anschließend ein weiterer Walzstich durchgeführt wird, können überraschenderweise auch Plattierschichtdicken von weniger als 50 µm hergestellt werden, die frei von Verfärbungen nach dem Anodisieren sind. Da Diffusionsvorgänge unter Berücksichtigung des erfindungsgemäßen Verfahrens keine negativen Auswirkungen auf die Qualität anodisierter Plattierschichten haben, wird der Einsatz von verschiedensten Aluminiumlegierungen für die Kernschicht des walzplattierten, hochglänzenden Aluminiumbandes ermöglicht, insbesondere auch Aluminiumlegierungen mit Legierungsbestandteilen in signifikanten Mengen, die bei höheren Temperaturen große Diffusionsgeschwindigkeiten aufweisen, wie beispielsweise Magnesium, Zink und Silizium.

Gemäß einer ersten vorteilhaften Ausführungsform des erfindungsgemäßen Verfahrens wird eine Kernschicht verwendet, welche aus einer Aluminiumlegierung vom Typ AA4xxx besteht. Diese Aluminiumlegierungen sind aufgrund ihres Siliziumgehaltes normalerweise problematisch im Hinblick auf deren Verwendung als Kernschicht bei walzplattierten, hochglänzenden Aluminiumbändern. Durch das erfindungsgemäße Verfahren wird jedoch verhindert, dass die enthaltenen Silizium-, Magnesium- oder Zinkatome durch Diffusionsprozesse an die Oberfläche der Plattierschicht gelangen. Bei der Anodisierung treten daher keine Verfärbungen der walzplattierten, hochglänzenden Plattierschicht auf. Aluminiumlegierungen vom Typ AA4xxx werden zwar als recyclingfreundlich bezeichnet, da sie insbesondere unter Verwendung von rezykliertem Material hergestellt werden können und insofern den Einsatz von kostenintensivem Primärmetall verringern. Allerdings standen bisher nur wenige Anwendungsbereiche zur Verfügung, welche den Einsatz Aluminiumlegierungen mit entsprechenden Siliziumgehalten zu lassen. Für dies Aluminiumlegierungen wurde also ein neues Anwendungsgebiet mit der vorliegenden Erfindung erschlossen.

Gemäß einer nächsten weitergebildeten Ausführungsform des erfindungsgemäßen Verfahrens kann ein walzplattiertes, hochglänzendes Aluminiumband besonders kostengünstig dadurch hergestellt werden, dass die Kernschicht aus einer Aluminiumlegierung mit den folgenden Legierungsbestandteilen in Gew.-% besteht:
Si ≤ 2,2 %,
Fe ≤ 0,7 %,
Cu ≤ 0,2 %,
Mn ≤ 1,2 %,
Mg ≤ 0,5 %,
Zn ≤ 0,2 %,
andere Verunreinigungen einzeln max. 0,05 %, in Summe max. 0,15 % und Rest Al.

Eine Legierung mit entsprechenden Legierungsbestandteilen fällt in der Regel bei der Rezyklierung von Schrotten lotplattierter Aluminiumbänder oder -bleche an, so dass die Aluminiumlegierung besonders kostengünstig durch Einschmelzung entsprechender Schrotte hergestellt werden kann. Darüber hinaus verfügt die Aluminiumlegierung mit den genannten Legierungsbestandteilen über eine sehr hohe Festigkeit, so dass ein hochfestes, hochglänzendes walzplattierte Aluminiumband hergestellt werden kann.

Vorzugsweise besteht die Kernschicht des walzplattierten, hochglänzenden Aluminiumbandes zur weiteren Kostenreduktion zumindest teilweise aus einer rezyklierten Aluminiumlegierung.

Wird zumindest der letzte Walzstich mit einer polierten Walze durchgeführt, kann auf ein nachfolgendes die Schichtdicke der Plattierschicht weiter verringerndes Polieren der Oberfläche verzichtet werden. Dies ermöglicht, dass die hochglänzende Plattierschicht nach der letzten Wärmebehandlung lediglich Dicken aufweisen kann, welche das Anodisieren ermöglicht. Die Plattierschicht kann insofern auch eine geringere Dicke als 50 µm, beispielsweise 10 bis 40 µm aufweisen, um möglichst wenig Reinaluminium zu verwenden.

Vorzugsweise beträgt die Schichtdicke der Plattierschicht vor dem letzten Walzstich 4 bis 20 % der Schichtdicke der Kernschicht. Die minimale relative Dicke der Plattierschicht von 4 % ermöglicht bei einem nachfolgenden Walzstich hohe Abwalzgrade, ohne das es zu einem Reißen der Plattierschicht kommt. Andererseits muss zur Gewährleistung einer Dickenabnahme der härteren Kernschicht beim Walzen gewährleistet sein, dass die Schichtdicke der Plattierschicht 20 % der Dicke der Kernschicht nicht übersteigt.

Mit dem erfindungsgemäßen Verfahren können einen besonders geringen Verbrauch an Reinaluminium aufweisende und damit kostengünstige walzplattierte, hochglänzende Aluminiumbänder dadurch hergestellt werden, dass die Plattierschicht auf eine Enddicke von weniger als 50 µm gewalzt wird.

Vorzugsweise weist die Plattierschicht einen Aluminiumgehalt von mindestens 99,8 Gew.-%, vorzugsweise mindestens 99,9 Gew.-% auf. Entsprechend hohe Aluminiumgehalte in der Plattierschicht gewährleisten einerseits hochglänzende Oberflächen nach einem Walzen mit einer polierten Walze, da die Plattierschichten mit entsprechend hohen Aluminiumgehalten besonders hohe Reflektionswerte erreichen. Andererseits zeichnen sich die Plattierschichten durch eine besonders geringe Korrosionsanfälligkeit aus, insbesondere je reiner die Aluminiumlegierung ist.

Vorzugsweise wird die letzte Zwischenglühung im Coil durchgeführt. Aufgrund der Diffusionssperrwirkung der mindestens 50 µm dicken Plattierschicht wird trotz des langen Einflusses hoher Temperaturen auf das walzplattierte Aluminiumband ein signifikanter Transport von beispielsweise Magnesium- oder Zink- und/oder Siliziumatomen an die Oberfläche der Plattierschicht verhindert. Die Verwendung von kostengünstigen Bachtöfen zur Durchführung der Zwischenglühung wird ermöglicht. Allerdings ist auch denkbar, die Zwischenglühung im Durchlaufofen durchzuführen. Allerdings erfordert ein Durchlaufofen wesentlich höhere Investitionen als ein Batchofen.

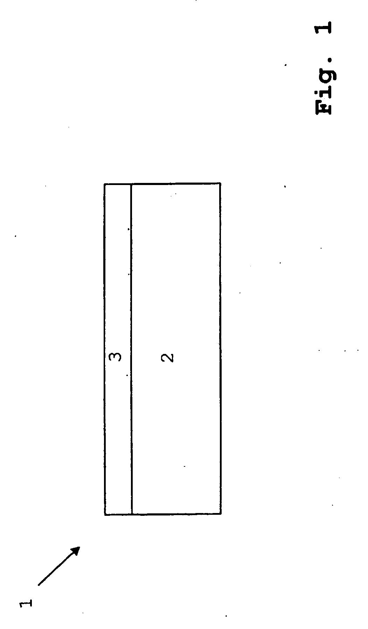

Es gibt nun eine Vielzahl von Möglichkeiten das erfindungsgemäße Verfahren zur Herstellung eines walzplattierten, hochglänzendes Aluminiumbandes sowie das walzplattierte, hochglänzende Aluminiumband weiter zu entwickeln und auszugestalten. Hierzu wird verwiesen einerseits auf die den unabhängigen Patentansprüchen 1 und 10 nachgeordneten Patentansprüche. Andererseits auf die Beschreibung eines bevorzugten Ausführungsbeispiels in Verbindung mit der Zeichnung.

Die Zeichnung zeigt in einer einzigen Figur eine Schnittansicht eines Ausführungsbeispiels des erfindungsgemäßen walzplattierten, hochglänzenden Aluminiumbandes 1. Die Kernschicht 2 des nach dem erfindungsgemäßen Verfahren hergestellten walzplattierten, hochglänzenden Aluminiumbandes 1 besteht aus einer Aluminiumlegierung mit den folgenden Legierungsbestandteilen:
1,4 ≤ Si ≤ 2,2 %,
Fe ≤ 0,7 %,
Cu ≤ 0,2 %,
0,6 ≤ Mn ≤ 1,2 %,
0,1 ≤ Mg ≤ 0,5 %,
Zn ≤ 0,2 %,
andere Verunreinigungen einzeln max. 0,05 %, in Summe max. 0,15 % und Rest Al.

Die Aluminiumlegierung der Kernschicht des dargestellten Ausführungsbeispiels zeichnet sich insbesondere durch eine hohe Recyclingfreundlichkeit aus, da diese insbesondere aufgrund des zugelassenen Siliziumgehaltes den Einsatz von rezyklierten aluminiumlotplattierten Blechen oder Schrotten zur Herstellung der Aluminiumlegierung der Kernschicht zulässt. Darüber hinaus weist diese Kernschicht besonders gute Festigkeits-, insbesondere Warmfestigkeitswerte auf, so dass für plattierte, hochglänzende Aluminiumbänder neue Anwendungsfelder erschlossen werden können. Die Plattierschicht 3 des dargestellten Ausführungsbeispiels eines erfindungsgemäßen walzplattierten, hochglänzenden Aluminiumbandes 1 weist vor dem letzten Zwischenglühen mindestens eine Schichtdicke von 50 µm auf, so dass durch die Temperatureinwirkung beim Zwischenglühen, insbesondere bei der Verwendung von Bachöfen und der Glühung im Coil, keine signifikanten Transporte von Fremdatomen aus der Kernschicht, beispielsweise Magnesium, Zink und Silizium, an die Oberfläche der Plattierschicht stattfindet. Da die walzplattierten, hochglänzenden Aluminiumbänder nach dem Zwischenglühen nur noch wesentlich geringeren Temperaturen als bei der Zwischenglühung ausgesetzt sind, kann die Plattierschicht in ihrer Enddicke auch weniger als 50 µm, vorzugsweise 10 bis 40 µm, betragen, ohne dass es zu signifikanten Diffusionsprozessen und damit zu Verfärbung von anodisierten hochglänzenden Oberflächen der Aluminiumbänder in der späteren Anwendung kommt. Es hat sich nämlich überraschenderweise gezeigt, dass lediglich die hohen Temperaturen bei den Glühvorgängen während der Herstellung der Aluminiumbänder die im Hinblick auf die Anodisierung oberflächenproblematischen Diffusionsprozesse auslösen. Ist die Wärmebehandlung unter Gewährleistung einer Verhinderung der Diffusion von Legierungsbestandteilen aus der Kernschicht an die Oberfläche der Plattierschicht abgeschlossen, kann eine hochglanzpolierte Oberfläche der Plattierschicht bereit gestellt werden, die nach der Anodisierung keine

Verfärbung aufweist und dennoch sehr geringe Schichtdicken aufweist.

Die Oberfläche des dargestellten Ausführungsbeispiels wird vorzugsweise hochglanzgewalzt, so dass ein nachträglicher Polierschritt, welcher einerseits zusätzliche Verunreinigungen in die Oberfläche einbringen kann, andererseits aufwendig ist, vermieden werden kann. Darüber hinaus muss für einen anschließenden Anodisierungsprozess keine zusätzliche Schichtdicke der Plattierschicht, die beim Polieren verloren geht berücksichtigt werden. Aufgrund der gezielten Ausnutzung der Plattierschicht als Diffusionssperre während der Herstellung des walzplattierten, hochglänzenden Aluminiumbandes 1 können Enddicken des Aluminiumbandes von 0,1 bis 1 mm erreicht werden, wobei die Plattierschicht beispielsweise eine Enddicke von 10 bis 40 µm aufweisen kann.

## Patentansprüche

1. Verfahren zur Herstellung eines walzplattierten, hochglänzenden Aluminiumbandes, bei welchem ein Kernmaterial aus einer Aluminiumlegierung vom Typ AA4xxx mindestens auf einer Seite mit einer Plattierschicht mit einem Aluminiumgehalt von mindestens 99,8 Gew.-% plattiert wird und die Plattierschicht auf eine Enddicke von weniger als 50 µm gewalzt wird,
**dadurch gekennzeichnet, dass** das Aluminiumband zwischengeglüht wird und die Schichtdicke der Plattierschicht vor der letzten Zwischenglühung mindestens 50 µm beträgt.

2. Verfahren nach Anspruch 1,
**dadurch gekennzeichnet, dass** die Kernschicht aus einer Aluminiumlegierung mit den folgenden Legierungsbestandteilen in Gew.-% besteht:
Si ≤ 2,2 %,
Fe ≤ 0,7 %,
Cu ≤ 0,2 %,
Mn ≤ 1,2 %,
Mg ≤ 0,5 %,
Zn ≤ 0,2 %,
andere Verunreinigungen einzeln max. 0,05 %, in Summe max. 0,15 % und Rest Al.

3. Verfahren nach Anspruch 1 oder 2,
**dadurch gekennzeichnet, dass** die Kernschicht zumindest teilweise aus einer rezyklierten Aluminiumlegierung besteht.

4. Verfahren nach einem der Ansprüche 1 bis 3,
**dadurch gekennzeichnet, dass** zumindest der letzte Walzstich mit einer polierten Walze durchgeführt wird.

5. Verfahren nach einem der Ansprüche 1 bis 4,
**dadurch gekennzeichnet, dass** die Schichtdicke der Plattierschicht vor dem letzten Walzstich 4 bis 20 % der Schichtdicke der Kernschicht beträgt.

6. Verfahren nach einem der Ansprüche 1 bis 5,
**dadurch gekennzeichnet, dass** die Plattierschicht einen Aluminiumgehalt von mindestens 99,9 Gew.-% aufweist.

7. Verfahren nach einem der Ansprüche 1 bis 6,
**dadurch gekennzeichnet, dass** die letzte Zwischenglühung im Coil durchgeführt wird.

## Claims

1. A method for producing a roll-clad, high-gloss aluminium strip, in which a core material made of an aluminium alloy of type AA4xxx is clad on at least one side with a cladding layer having an aluminium content of at least 99.8 % by weight and the cladding layer is rolled to an end thickness of less than 50 µm,
**characterised in that** the aluminium strip is intermediate annealed and the layer thickness of the cladding layer is at least 50 µm before the last intermediate annealing operation.

2. The method according to Claim 1,
**characterised in that** the core layer consists of an aluminium alloy containing the following alloy constituents in % by weight:
Si ≤ 2.2 %,
Fe ≤ 0.7 %,
Cu ≤ 0.2 %,
Mn ≤ 1.2 %,
Mg ≤ 0.5 %,
Zn ≤ 0.2 %,
containing other impurities in an amount of 0.05 % at most individually, with a maximum total of 0.15 %, and the rest being formed by Al.

3. The method according to Claim 1 or 2,
**characterised in that** the core layer consists at least in part of a recycled aluminium alloy.

4. The method according to one of Claims 1 to 3,
**characterised in that** at least the last roll pass is carried out with a polished roll.

5. The method according to one of Claims 1 to 4,
**characterised in that** the layer thickness of the cladding layer before the last roll pass is 4 to 20 % of the layer thickness of the core layer.

6. The method according to one of Claims 1 to 5,
**characterised in that** the cladding layer has an aluminium content of at least 99.9 % by weight.

7. The method according to one of Claims 1 to 6,
**characterised in that** the last intermediate annealing operation is carried out in the coil.

## Revendications

1. Procédé de fabrication d'une bande d'aluminium à haute brillance ayant subi un placage par laminage, son matériau de noyau en alliage d'aluminium de type AA4xxx étant pourvu par placage, au moins sur une face, d'une couche de placage dont la teneur en aluminium est d'au moins 99,8 % en poids, et ladite couche de placage étant laminée jusqu'à ce que son épaisseur finale soit inférieure à 50 µm,
**caractérisé en ce que** ladite bande d'aluminium subit un recuit intermédiaire et l'épaisseur de couche de la couche de placage est d'au moins 50 µm avant le dernier recuit intermédiaire.

2. Procédé selon la revendication 1,
**caractérisé en ce que** la couche de noyau est constitué d'un alliage d'aluminium présentant les composants d'alliage suivants en % en poids :
Si ≤ 2,2 %,
Fe ≤ 0,7 %,
Cu ≤ 0,2 %,
Mn ≤ 1,2 %,
Mg ≤ 0,5 %,
Zn ≤ 0,2 %,
d'autres impuretés représentant au max. 0,05 % prises seules, au max 0,15 % en somme, et le reste étant Al.

3. Procédé selon les revendications 1 ou 2,
**caractérisé en ce que** la couche de noyau est constituée au moins partiellement d'un alliage d'aluminium issu du recyclage.

4. Procédé selon l'une des revendications 1 à 3,
**caractérisé en ce que** la dernière passe de laminage est réalisée avec un cylindre poli.

5. Procédé selon l'une des revendications 1 à 4,
**caractérisé en ce que** l'épaisseur de couche de la couche le placage représente, avant la dernière passe de laminage, 4 à 20 % de l'épaisseur de couche de la couche de noyau.

6. Procédé selon l'une des revendications 1 à 5,
**caractérisé en ce que** la couche de placage présente une teneur en aluminium d'au moins 99,9 % en poids.

7. Procédé selon l'une des revendications 1 à 6,
**caractérisé en ce que** le dernier recuit intermédiaire est réalisé à l'état de rouleau.
